(19) Europäisches Patentamt
European Patent Office
Office européen des brevets

(11) Publication number: **0 209 260 B1**

# (12) EUROPEAN PATENT SPECIFICATION

(45) Date of publication of patent specification: **11.09.91** (51) Int. Cl.$^5$: **C02F 1/50**

(21) Application number: **86304718.9**

(22) Date of filing: **19.06.86**

The file contains technical information submitted after the application was filed and not included in this specification

(54) **Biocidal mixture.**

(30) Priority: **17.07.85 GB 8517993**

(43) Date of publication of application:
**21.01.87 Bulletin 87/04**

(45) Publication of the grant of the patent:
**11.09.91 Bulletin 91/37**

(84) Designated Contracting States:
**AT BE CH DE FR GB IT LI LU NL SE**

(56) References cited:
**DE-A- 2 008 683**
**GB-A- 2 138 799**
**GB-A- 2 145 708**

(73) Proprietor: **W.R. Grace & Co.-Conn. (a Connecticut corp.)**
**Grace Plaza 1114 Avenue of the Americas**
**New York New York 10036(US)**

(72) Inventor: **Clifford, Richard Purdie**
**19 Berry Drive**
**Great Sutton South Wirral(GB)**
Inventor: **Clarkson, Douglas**
**64 Long Lane**
**Aughton Lancashire(GB)**
Inventor: **Marshall, Alan**
**Box Tree Mews**
**Macclesfield Cheshire(GB)**

(74) Representative: **Ellis-Jones, Patrick George Armine et al**
**J.A. KEMP & CO. 14 South Square Gray's Inn**
**London WC1R 5EU(GB)**

EP 0 209 260 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the treatment of aqueous systems, especially cooling water systems, and to the composition used herein.

In industrial cooling water systems, for instance in industrial cooling towers, the water used is not, of course, sterile with the result that bacteria accumulate in the system and this quite commonly gives rise to a slimy deposit on the surfaces of the system which come into direct contact with the cooling water. This has essentially two adverse effects. First, if the slime is allowed to accumulate it tends to clog up the equipment and make it less efficient. Second, the slime harbours bacteria, in particular anaerobic bacteria which, underneath the slime, can cause corrosion of the metal surface.

A variety of different microbiological control agents have been used to inhibit slime formation and while some of these are effective in preventing the accumulation of slime they are not able to prevent the formation of slime altogether. In consequence, therefore, it is not possible to prevent corrosion occurring.

The present invention resides in the discovery that specific combinations of two types of biocide give rise to synergistic effects such that the extent to which the bacteria are killed exceeds that which one would expect from using the sum of the individual components of the compositions.

GB-A-2145708 discloses a biocidal composition based on a phosphorous compound having a hydroxy alkyl group directly attached to the phosphous atom; such compounds are obtained by reacting phosphine with an aldehyde usually formaldehyde or a ketone such that the product may contain up to 10% by weight of free aldehyde or ketone.

GB-A-2138799 discloses a method of treating an aqueous system with a biocide, for example an alkyl phosphonium compound or a straight chain aliphatic aldehyde such as glutaraldehyde, and an ethoxylated phenol.

According to the present invention there is provided a method of treating an aqueous system which comes into contact with a metal which comprises applying thereto a phosphonium compound of the formula:

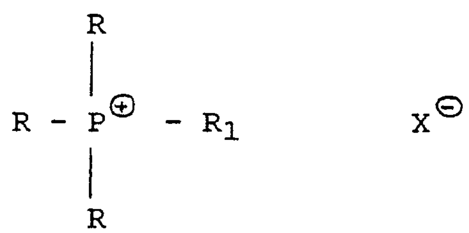

wherein each R, which may be the same or different, is a $C_1$-$C_6$ alkyl group which is optionally substituted by, say, a hydroxy, aryl or cyano group, or a phenyl group which is optionally substituted by one or more $C_1$-$C_4$ alkyl groups, $R_1$ is a $C_8$-$C_{18}$ alkyl group, X is chlorine or bromine, and a straight chain aliphatic di-aldehyde, the phosphonium compound and aldehyde being present in a weight ratio of 10:1 to 1:10.

It is believed that the phosphonium compounds are broad spectrum biocides which are also particularly effective at "cleaning" surfaces from slime and microbiological debris while the aldehydes are effective against both aerobic and anaerobic bacteria.

With the phosphonium compounds it is particularly preferred that R represents n-butyl, $R_1$ represents tetra-decyl and X is chlorine. A commercially available phosphonium compound is Belclene (registered trade mark) 350 available from Ciba Geigy. This is a 50% active aqueous solution.

Suitable straight chain aliphatic di-aldehydes generally possess 2 to 6 carbon atoms, especially saturated dialdehydes having 2 to 6 carbon atoms such as glutaraldehyde which is particularly preferred. This is available as a 50% active solution as Ucarcide (registered trade mark) from Union Carbide and as Sepacid 50 (registered trade mark) from BASF.

While the two types of biocide can be added separately to the system, it will generally be more convenient to add them together in the form of a composition. Accordingly, the present invention also provides a composition suitable for addition to an aqueous system which comes into contact with a metal which comprises a phosphonium compound of the specified formula together with a straight chain aliphatic aldehyde.

In general, the composition will be added to the system in an amount up to 500 mg per litre (active) and especially to 50 mg per litre. Typically, the concentration of the aldehyde will be greater than that of the phosphonium compound, the amounts of aldehyde being typically up to 300 mg per litre and preferably

from 1 to 20 mg per litre while the amount of phosphonium compound added is typically up to 200 mg per litre, preferably from 1 to 20 mg per litre. The weight ratio of the two types of bactericide is from 10:1 to 1:10, especially from 3:1 to 1:3. A very cost effective formulation can be provided with a weight ratio of about 1:1.

It will, of course, be appreciated that other ingredients can be present in the composition, notably dispersants, especially dispersants which have biological activity, in particular ethoxylated phenols having the general formula

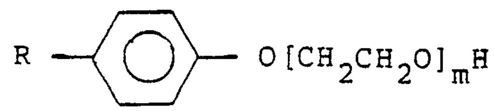

wherein m represents 2-40 and R represents $C_nH_{2n+1}$ in which n is from 0-19. m preferably represents from 4-15. A specific ethoxylate which has been found to give good results is that sold under the registered trade mark Ethylan HB4 which is believed to be a phenol ethoxylate having about 4 ethoxylate units.

In a typical formulation, there will be 5-20% by weight of each of the two biocides and 2-10% by weight of dispersant and especially about 10% by weight of each of the biocides and about 5% by weight of the dispersant, with the remainder, in all cases, being water.

It has been found that the use of such a combination of biocides is effective to keep the surfaces of the aqueous system free of slimy deposits and to prevent corrosion caused by, in general, sulphate-reducing bacteria which can form under the slimy deposits, while, at the same time, being synergistic. A further surprising finding is that this combination is effective against legionella pneumophila. While several biocides are known to be effective against legionella pneumophila the combination of this invention is particularly effective.

The use of the two biocides is thus particularly effective at maintaining clean and corrosion free conditions in water treatment plant such as industrial cooling water systems as well as in, say, air conditioning plant and plant for water sprinklers.

The following Examples further illustrate the present invention.

EXAMPLE 1

Pseudomonas fluorescens previously isolated from a water sample from an industrial cooling system was grown in nutrient broth using standard microbiological techniques to give bacterial counts of between $10^5$ and $10^6$ organisms per ml when incubated on nutrient agar at 22 °C for 3 days. This bacterial population was then exposed for periods of 2 hours and 4 hours to various concentrations of glutaraldehyde and tri-n-butyl, tetradecyl phosphonium chloride both alone and in combination at different ratios.

After these contact times samples were taken and incubated on nutrient agar for 3 days at 22 °C and surviving bacteria counted. For each contact time and ratio of biocides studied, graphs were constructed of percent bacteria killed as a function of biocide concentration. The concentration of biocide necessary to give a 90% kill was then read from the graph and is tabulated below.

1. Contact time : 2 hours

| Concentration of Biocide to Give 90% Kill | | Ratios of A/B |
|---|---|---|
| Alkyl Phosphonium material (A) | Glutaraldehyde (B) | |
| 13 mg/l | 0 mg/l | OO : 1 |
| 6 mg/l | 2 mg/l | 3 : 1 |
| 4 mg/l | 4 mg/l | 1 : 1 |
| 3.7 mg/l | 11.2 mg/l | 1 : 3 |
| 0 mg/l | 17 mg/l | 1 : OO |

2. Contact time : 4 hours

| Concentration of Biocide to Give 90% Kill | | Ratios of A/B |
|---|---|---|
| Alkyl Phosphonium material (A) | Glutaraldehyde (B) | |
| 8.6 mg/l | 0 mg/l | OO : 1 |
| 3.75 mg/l | 1.25 mg/l | 3 : 1 |
| 3.5 mg/l | 3.5 mg/l | 1 : 1 |
| 2.3 mg/l | 6.9 mg/l | 1 : 3 |
| 0 mg/l | 12.4 mg/l | 1 : OO |

These examples demonstrate that the alkyl phosphonium chloride and glutaraldehyde are synergistic at least in the ratio of 3:1 to 1:3.

EXAMPLE 2

Three laboratory experimental recirculating cooling systems were innoculated with Pseudomonas Fluorescens to give counts in the recirculating cooling water of $10^6$ to $10^7$ organisms per ml. A small plastic disc was inserted in each system. To one system was added 12.5 mg/l of the alkyl phosphonium chloride at weekly intervals, to another was added 5 mg/l of the alkyl phosphonium chloride and 5 mg/l of glutaraldehyde at weekly intervals and the third was run without any biocide addition. After three weeks the plastic discs were removed and the number of bacteria adhering to the surface of each disc was determined as follows.

Disc without biocide addition : $2.7 \times 10^{10}$ organisms.
Disc with 12.5 mg/l of alkyl phosphonium chloride : $5.0 \times 10^5$ organisms.
Disc with 5 mg/l of alkyl phosphonium chloride and 5 mg/l of glutaraldehyde : $3.2 \times 10^7$ organisms.
These results indicate the alkyl phosphonium chloride to be effective at keeping surfaces free of bacteria in the presence of glutaraldehyde as well as alone.

The effectiveness of the glutaraldehyde component against anaerobic bacteria was demonstrated by exposing water known to contain sulphate reducing bacteria to glutaraldehyde. This exposure was for 24 hours at 30°C, whereupon 1 ml samples of water were transferred to tubes containing culture medium which was specific for sulphate reducing bacteria. The medium was then incubated at 30°C and the number of days noted for positive indications of sulphate reducing bacteria (i.e. formulation of iron sulphide leading to blackening of the medium). The results obtained were:

| Glutaraldehyde Concn. | No of Days |
|---|---|
| 12.5 mg/l | 4 |
| 25 mg/l | 7 |
| 50 mg/l | 7 |
| 100 mg/l | 7 |
| 200 mg/l | 9 |
| Nil | 1 |

This confirms glutaraldehyde as being effective against anaerobic bacteria.

These examples thus illustrate that the biocide combination both:

(i) keeps surfaces clean of bacteria, and

(ii) kills anaerobic bacteria and so prevents underdeposit corrosion.

EXAMPLE 3

This example illustrates the effectiveness of the biocide combination against Legionella Pneumophila.

Legionella Pneumophila was incubated in broth culture at 37° for 48 hours. The bacterial cells were then "harvested" by centrifugation and a suspension of these prepared in 25ml of sterile deionised water. 2 ml aliquots of this suspension were taken and added to 100ml of water containing the biocide under study. These samples were then maintained for 0.5 hours, 2 hours, and 24 hours at 22°C with intermittent agitation. At the end of the biocide contact period, 9 ml of bacterial suspension was removed and mixed with 1ml of neutralising solution. The neutralising solution consisted of 0.07g of Soy Lecithin and 0.5g of Tween 80 (Registered Trade Mark for polyoxyethylene sorbitan mono-oleate) made to 100ml with sterile tap water. 1ml of the neutralised suspension was then serially diluted to $10^{-4}$ using 9ml volumes of sterile tap water. Streak plate cultures were then prepared on CYE agar (prepared according to the instructions of the manufacturer [Oxoid Ltd]), and these incubated at 37°C for 7 days. Following this incubation period, the bacterial colonies on suitable plates (30-300 colonies per plate) were counted and converted to surviving organisms per ml of water treated with biocide.

The results obtained were:

| Contact Time (Hours) | Concentration of | | |
|---|---|---|---|
| | Alkyl Phosphonium Material | Glutaraldehyde | Legionella Pneumophila/ml |
| 0.5 | Nil | Nil | $9.6 \times 10^6$ |
| | 2.5 mg/l | 2.5 mg/l | $4.9 \times 10^4$ |
| | 5 mg/l | 5 mg/l | $<1 \times 10^3$ |
| | 10 mg/l | 10 mg/l | $<1 \times 10^3$ |
| | 20 mg/l | 20 mg/l | $<1 \times 10^3$ |
| 2 | Nil | Nil | $6.0 \times 10^6$ |
| | 2.5 mg/l | 2.5 mg/l | $<1 \times 10^2$ |
| | 5 mg/l | 5 mg/l | $<1 \times 10^2$ |
| | 10 mg/l | 10 mg/l | $<1 \times 10^2$ |
| | 20 mg/l | 20 mg/l | $<1 \times 10^2$ |
| 24 | Nil | Nil | $2.9 \times 10^5$ |
| | 2.5 mg/l | 2.5 mg/l | $<1 \times 10^2$ |
| | 5 mg/l | 5 mg/l | $<1 \times 10^2$ |
| | 10 mg/l | 10 mg/l | $<1 \times 10^2$ |
| | 20 mg/l | 20 mg/l | $<1 \times 10^2$ |

This example illustrates the biocide combination to be effective against Legionella Pneumophila. A total

biocide concentration of 5mg/l killed 99.99% of the organisms present in 2 hours.

## Claims

1. A method of treating an aqueous system which comes into contact with a metal which comprises adding thereto i) a phosphonium compound of the formula:

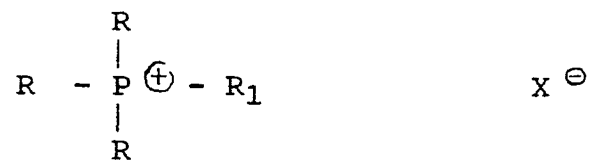

wherein each R, which may the same or different, is a $C_1$-$C_6$ alkyl group which is optionally substituted by a hydroxy, aryl, or cyano group, or a phenyl group which is optionally substituted by one or more $C_1$-$C_4$ alkyl groups, $R_1$ is a $C_8$-$C_{18}$ alkyl group and x is chlorine or bromine, and ii) a straight chain aliphatic dialdehyde, the phosphonium compound and aldehyde being present in a weight ratio of 10:1 to 1:10.

2. A method according to claim 1 in which R represents n-butyl, $R_1$ represents tetradecyl and X represents chlorine.

3. A method according to claim 1 or 2 in which the aldehyde is a saturated dialdehyde having 2 to 6 carbon atoms.

4. A method according to claim 3 in which the aldehyde is glutaraldehyde.

5. A method according to any one of the preceding claims in which the phosphonium compound is present in an amount up to 200 mg per litre.

6. A method according to Claim 5 in which the phosphonium compound is present in an amount from 1 to 20 mg per litre.

7. A method according to any one of the preceding claims in which the aldehyde is present in an amount up to 300 mg per litre.

8. A method according to Claim 7 in which the aldehyde is present in an amount from 1 to 20 mg per litre.

9. A method according to any one of the preceding claims in which the phosphonium compound and aldehyde are present in a weight ratio of 3:1 to 1:3.

10. A method according to Claim 9 in which the phosphonium compound and aldehyde are present in a weight ratio of about 1:1.

11. A method according to any one of the preceding claims in which a dispersant having biological activity is also added to the system.

12. A method according to Claim 11 in which the dispersant is an ethoxylated phenol having the formula:

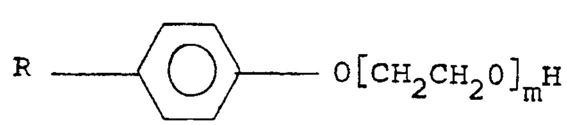

wherein m represents 2 to 40 and R represents $C_nH_{2n+1}$ in which n is from 0 to 18.

**13.** A method according to claim 12 in which n is 0 and m is 4.

**14.** A method according to any one of the preceding claims in which the aqueous system is an industrial cooling water system or an aqueous system forming part of an air conditioning plant.

**15.** A composition suitable for addition to an aqueous system which comes into contact with a metal which comprises i) a phosphonium compound as defined in claim 1 and ii) a straight chain aliphatic di-aldehyde in a weight ratio of 10:1 to 1:10.

**16.** A composition according to claim 15 in which R represents n-butyl, $R_1$ represents tetradecyl and X represents chlorine.

**17.** A composition according to claim 15 or 16 in which the aldehyde is a saturated dialdehyde having 2 to 6 carbon atoms.

**18.** A composition according to claim 17 in which the aldehyde is glutaraldehyde.

**19.** A composition according to any one of claims 15 to 18 in which the phosphonium compound and aldehyde are present in a weight ratio of 3:1 to 1:3.

**20.** A composition according to Claim 19 in which the phosphonium compound and aldehyde are present in a weight ratio of about 1:1.

**21.** A composition according to any one of Claims 15 to 20 which contains 5 to 20% by weight of each of the phosphonium compound and the aldehyde.

**22.** A composition according to Claim 21 which contains about 10% by weight of each of the phosphonium compound and the aldehyde.

**23.** A composition according to any one of Claims 15 to 22 which also contains a dispersant having biological activity.

**24.** A composition according to Claim 23 in which the dispersant is an ethoxylated phenol having the formula:

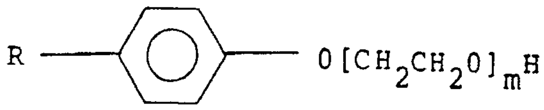

wherein m represents 2 to 40 and R represents $C_nH_{2n+1}$ in which n is from 0 to 18.

**25.** A composition according to Claim 24 in which n is 0 and m is 4.

**26.** A composition according to any one of Claims 23 to 25 in which the dispersant is present in an amount from 2 to 10% by weight.

**27.** A composition according to Claim 26 in which the dispersant is present in an amount of about 5% by weight.

**Revendications**

**1.** Méthode de traitement d'un réseau aqueux qui vient en contact avec un métal qui consiste à lui ajouter i) un composé de phosphonium de la formule :

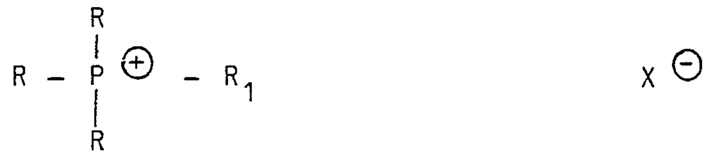

où chaque R, qui peut être identique ou différent, est un groupe alkyle $C_1$-$C_6$ qui est facultativement substitué par un groupe hydroxy, aryle ou cyano, ou bien un groupe phényle qui est facultativement substitué par en ou plusieurs groupes alkyles $C_1$-$C_4$, $R_1$ est un groupe alkyle $C_8$-$C_{18}$ et X est chlore ou brome et ii) un dialdéhyde aliphatique à chaîne droite, le composé de phosphonium et l'aldéhyde étant présents à un rapport pondéral de 10:1 à 1:10.

**2.** Méthode selon la revendication 1, où R représente n-butyle, $R_1$ représente tétradécyle et X représente chlore.

**3.** Méthode selon la revendication 1 ou 2, où l'aldéhyde est un dialdéhyde saturé ayant 2 à 6 atomes de carbone.

**4.** Méthode selon la revendication 3, où l'aldéhyde est le glutaraldéhyde.

**5.** Méthode selon l'une quelconque des revendications précédentes, où le composé de phosphonium est présent en une quantité pouvant atteindre 200 mg par litre.

**6.** Méthode selon la revendication 5, où le composé de phosphonium est présent en une quantité de 1 à 20 mg par litre.

**7.** Méthode selon l'une quelconque des revendications précédentes, où l'aldéhyde est présent en une quantité pouvant atteindre 300 mg par litre.

**8.** Méthode selon la revendication 7, où l'aldéhyde est présent en une quantité de 1 à 20 mg par litre.

**9.** Méthode selon l'une quelconque des revendications précédentes, où le composé de phosphonium et l'aldéhyde sont présents à un rapport pondéral de 3:1 à 1:3.

**10.** Méthode selon la revendication 9, où le composé de phosphonium et l'aldéhyde sont présents à un rapport pondéral d'environ 1:1.

**11.** Méthode selon l'une quelconque des revendications précédentes, où un agent dispersant ayant une activité biologique est également ajouté au système.

**12.** Méthode selon la revendication 11, où l'agent dispersant est un phénol éthoxylé ayant pour formule :

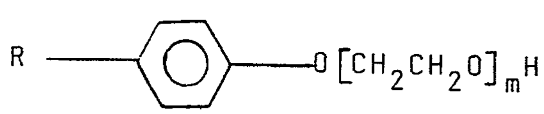

où m représente 2 à 40 et R représente $C_nH_{2n+1}$ où n est compris entre 0 et 18.

**13.** Méthode selon la revendication 12, où n est 0 et m est 4.

**14.** Méthode selon l'une quelconque des revendications précédentes où le réseau aqueux est un réseau d'eau de refroidissement pour l'industrie ou un réseau aqueux faisant partie d'une installation de climatisation.

**15.** Composition appropriée à une addition à un réseau aqueux qui vient en contact avec un métal qui comprend i) un composé de phosphonium tel que défini à la revendication 1 et ii) un dialdéhyde aliphatique à chaîne droite à un rapport pondéral de 10:1 à 1:10.

**16.** Composition selon la revendication 15, où R représente n-butyle, $R_1$ représente tétradécyle et X représente chlore.

**17.** Composition selon la revendication 15 ou 16, où l'aldéhyde est un dialdéhyde saturé ayant 2 à 6 atomes de carbone.

**18.** Composition selon la revendication 17, où l'aldéhyde est le glutaraldéhyde.

**19.** Composition selon l'une quelconque des revendications 15 à 18 où le composé de phosphonium et l'aldéhyde sont présents à un rapport pondéral de 3:1 à 1:3.

**20.** Composition selon la revendication 19, où le composé de phosphonium et l'aldéhyde sont présents à un rapport pondéral d'environ 1:1.

**21.** Composition selon l'une quelconque des revendications 15 à 20 qui contient 5 à 20% en poids du composé de phosphonium et de l'aldéhyde.

**22.** Composition selon la revendication 21 qui contient environ 10% en poids du composé de phosphonium et de l'aldéhyde.

**23.** Composition selon l'une quelconque des revendications 15 à 22 qui contient également un agent dispersant ayant une activité biologique.

**24.** Composition selon la revendication 23, où le dispersant est un phénol éthoxylé ayant pour formule :

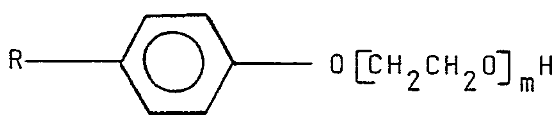

où m représente 2 à 40 et R représente $C_nH_{2n+1}$ où n est compris entre 0 et 18.

**25.** Composition selon ta revendication 24, où n est 0 et m est 4.

**26.** Composition selon l'une quelconque des revendications 23 à 25, où l'agent dispersant est présent en une quantité de 2 à 10% en poids.

**27.** Composition selon la revendication 26, où l'agent dispersant est présent en une quantité d'environ 5% en poids.

**Patentansprüche**

**1.** Verfahren zum Behandeln eines wäßrigen Systems, das mit einem Metall in Kontakt gelangt, bei dem zu dem System

i) eine Phosphoniumverbindung mit der Formel:

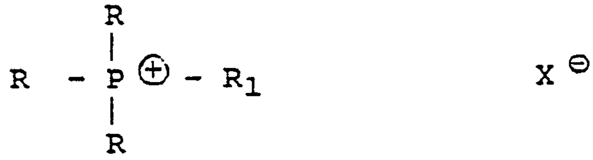

wobei jedes R, das gleich oder verschieden sein kann, eine $C_1$-$C_6$-Alkylgruppe, die gegebenenfalls mit einer Hydroxy-, Aryl- oder Cyanogruppe substituiert ist, oder eine Phenylgruppe ist, die gegebenenfalls mit einer oder mehreren $C_1$-$C_4$-Alkylgruppen substituiert ist, $R_1$ eine $C_8$-$C_{18}$-

Alkylgruppe ist und X Chlor oder Brom ist, und
ii) ein geradkettiges, aliphatisches Dialdehyd
zugesetzt werden, wobei die Phosphoniumverbindung und das Aldehyd in einem Gewichtsverhältnis von 10:1 bis 1:10 vorhanden sind.

**2.** Verfahren nach Anspruch 1, bei dem R n-Butyl ist, $R_1$ Tetradecyl ist und X Chlor ist.

**3.** Verfahren nach Anspruch 1 oder 2, bei dem das Aldehyd ein gesättigtes Dialdehyd mit 2 bis 6 Kohlenstoffatomen ist.

**4.** Verfahren nach Anspruch 3, bei dem das Aldehyd Glutaraldehyd ist.

**5.** Verfahren nach einem der vorhergehenden Ansprüche, bei dem die Phosphoniumverbindung in einer Menge bis zu 200 mg/l vorhanden ist.

**6.** Verfahren nach Anspruch 5, bei dem die Phosphoniumverbindung in einer Menge von 1 bis 20 mg/l vorhanden ist.

**7.** Verfahren nach einem der vorhergehenden Ansprüche, bei dem das Aldehyd in einer Menge von bis zu 300 mg/l vorhanden ist.

**8.** Verfahren nach Anspruch 7, bei dem das Aldehyd in einer Menge von 1 bis 20 mg/l vorhanden ist.

**9.** Verfahren nach einem der vorhergehenden Ansprüche, bei dem die Phosphoniumverbindung und das Aldehyd in einem Gewichtsverhältnis von 3:1 bis 1:3 vorhanden sind.

**10.** Verfahren nach Anspruch 9, bei dem Phosphoniumverbindung und das Aldehyd in einem Gewichtsverhältnis von 1:1 vorhanden sind.

**11.** Verfahren nach einem der vorhergehenden Ansprüche, bei dem dem System außerdem ein Dispergiermittel mit biologischer Aktivität zugesetzt wird.

**12.** Verfahren nach Anspruch 11, bei dem das Dispergiermittel ein ethoxyliertes Phenol mit der Formel:

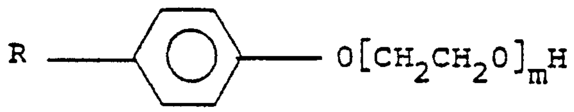

ist, wobei m 2 bis 40 ist und R $C_nH_{2n+1}$ ist, worin n 0 bis 18 ist.

**13.** Verfahren nach Anspruch 12, bei dem n 0 ist und m 4 ist.

**14.** Verfahren nach einem der vorhergehenden Ansprüche, bei dem das wäßrige System ein industrielles Kühlwassersystem oder ein wäßriges System ist, das einen Teil einer Klimaanlage bildet.

**15.** Zur Zugabe zu einem wäßrigen System, das mit einem Metall in Kontakt gelangt, geeignete Zusammensetzung, die i) eine wie in Anspruch 1 definierte Phosphoniumverbindung und ii) ein geradkettiges, aliphatisches Dialdehyd in einem Gewichtsverhältnis von 10:1 bis 1:10 umfaßt.

**16.** Zusammensetzung nach Anspruch 15, bei der R n-Butyl ist, $R_1$ Tetradecyl ist und X Chlor ist.

**17.** Zusammensetzung nach Anspruch 15 oder 16, bei der das Aldehyd ein gesättigtes Dialdehyd mit 2 bis 6 Kohlenstoffatomen ist.

**18.** Zusammensetzung nach Anspruch 17, bei der das Aldehyd Glutaraldehyd ist.

**19.** Zusammensetzung nach einem der Ansprüche 15 bis 18, bei der die Phosphoniumverbindung und das Aldehyd in einem Gewichtsverhältnis von 3:1 bis 1:3 vorhanden sind.

**20.** Zusammensetzung nach Anspruch 19, bei der die Phosphoniumverbindung und das Aldehyd in einem Gewichtsverhältnis von etwa 1:1 vorhanden sind.

**21.** Zusammensetzung nach einem der Ansprüche 15 bis 20, die jeweils 5 bis 20 Gew.% Phosphoniumverbindung und Aldehyd enthält.

**22.** Zusammensetzung nach Anspruch 21, die jeweils etwa 10 Gew.% Phosphoniumverbindung und Aldehyd enthält.

**23.** Zusammensetzung nach einem der Ansprüche 15 bis 22, die außerdem ein Dispergiermittel mit biologischer Aktivität enthält.

**24.** Zusammensetzung nach Anspruch 23, bei der das Dispergiermittel ein ethoxyliertes Phenol mit der Formel :

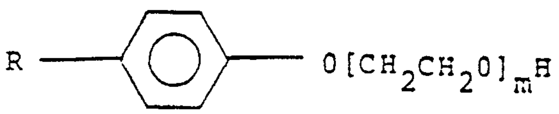

ist, wobei m 2 bis 40 ist und R $C_nH_{2n+1}$ ist, worin n 0 bis 18 ist.

**25.** Zusammensetzung nach Anspruch 24, bei der n 0 ist und m 4 ist.

**26.** Zusammensetzung nach einem der Ansprüche 23 bis 25, bei der das Dispergiermittel in einer Menge von 2 bis 10 Gew.% vorhanden ist.

**27.** Zusammensetzung nach Anspruch 26, bei der das Dispergiermittel in einer Menge von etwa 5 Gew.% vorhanden ist.